Europäisches Patentamt

European Patent Office

Office européen des brevets

(11) Publication number: **0 217 522**
A1

# (12) EUROPEAN PATENT APPLICATION

(21) Application number: 86306374.9

(22) Date of filing: 18.08.86

(51) Int. Cl.4: **B 62 D 29/04**

(30) Priority: 13.09.85 GB 8522659

(43) Date of publication of application:
08.04.87 Bulletin 87/15

(84) Designated Contracting States:
AT BE CH DE FR IT LI LU NL SE

(71) Applicant: HERON POWER LIMITED
46-62 Gatwick Road
Crawley West Sussex RH10 2XF(GB)

(72) Inventor: Rohan, Denys Claude Reynolds
3 Harton Close
Bromley Kent(GB)

(74) Representative: Jones, Graham H.
Graham Jones & Company 77 Beaconsfield Road
Blackheath
London SE3 7LG(GB)

(54) A three or four wheeled motor vehicle.

(57) A motor vehicle (2) comprises a chassis (32) which is made of a honeycomb material (30), the honeycomb material (30) being provided with apertures in which sleeve inserts (44) are provided, the sleeve inserts (44) being retained in position in their apertures by an adhesive, and the sleeve inserts (44) forming anchor points for receiving component parts of the motor vehicle.

FIG 1

EP 0 217 522 A1

0217522

## A THREE OR FOUR WHEELED MOTOR VEHICLE

This invention relates to a three or four wheeled motor vehicle.

As youths get older, they traditionally progress from bicyles to motor bicycles and then to motor cars. This traditional progression is due partly to statutory age limits for driving motor bicycles and motor cars, and it is due partly to cost considerations since motor bicycles are more expensive than bicycles, and cars are more expensive than motor bicycles. The transition from motor bicycles to cars often causes the youths and/or their parents something of a problem due to the fairly considerable difference in cost between purchasing a motor bicycle and purchasing a car. The car is considerably more expensive and often the youths have to wait longer than they would wish, in order to save the money necessary for buying the car, either new or second hand.

There is a need for a three or four wheeled motor vehicle that can be produced cheaply and so satisfy the needs of youths desiring to progress from bicycles or motor bicycles to three or four wheeled motor vehicles. It is an aim of the present invention to satisfy, at least in part, this need.

Accordingly, this invention provides a three or four wheeled motor vehicle, which motor vehicle comprises a chassis which is made of a honeycomb material, the honeycomb material being provided with apertures in which sleeve inserts are provided, the sleeve inserts being retained in position in their apertures by an adhesive, and the sleeve inserts forming anchor points for receiving component parts of the motor vehicle.

The use of the honeycomb material enables the motor vehicle to be light and yet strong. The use of the sleeve inserts for receiving the component parts of the motor vehicle helps to minimise on the cost of producing the motor vehicle since, otherwise, considerable amounts of welding would be needed which would increase the cost of production of the motor vehicle. The motor vehicle can thus be produced within a price range that is within the financial capabilities of youths and/or their parents. In addition, by producing a motor vehicle that is of a strong construction, the parents have the peace of mind that their children are driving in a safe vehicle and one which is safer than riding on motor bicycles. In addition, the parents will know that their children will not be subject to adverse weather conditions as they are on motor bicycles.

The motor vehicle is preferably a three wheeled motor vehicle. This is because the motor vehicle can be fitted with a 50cc engine, restricted to a maximum speed of 30 miles per hour, and then driven by youths of sixteen years of age on a driving licence for a moped.

The three wheeled motor vehicle can alternatively advantageously be fitted with an 80cc engine which can then be driven by a seventeen year old youth, or an older person if desired, and then the engine does not require a maximum speed limit restriction.

It will of course be appreciated that any size of engine may be fitted to the motor vehicle of the present invention. As an alternative to fitting an internal combustion engine, the vehicle may be battery powered if desired.

With a three wheeled motor vehicle having an engine of any desired size, the motor vehicle can also be driven by an adult on their own on a provisional licence. This can be particularly advantageous for adults such for example as housewives who wish to learn to drive on their own, or alternatively, who are often unable to find a qualified person to accompany them at convenient times.

The honeycomb material may comprise a layer of honeycomb sandwiched between two plates or skins. The honeycomb and the plates are produced separately and they are then stuck together. The plates may be stuck to either side of a layer of the honeycomb material using an appropriate adhesive, for example a Ciba-Geigy Redux adhesive such as Redux 609 or Redux 319.

Preferably, the motor vehicle is one in which the layer of honeycomb material is an aluminium layer of honeycomb material, and in which the two plates are aluminium plates. Usually, the aluminium will be an aluminium alloy. Such aluminium honeycomb material is currently available from Ciba-Geigy and it is known as Honeycomb Sandwich.

The motor vehicle may also be one in which the layer of honeycomb material is a plastics foam layer of honeycomb material, and in which the two plates are fibre glass plates. Such honeycomb material is also available from Ciba-Geigy as are other types of honeycomb material that may be used in the motor vehicle.

The honeycomb material may be bent to desired shapes. In order to bend the honeycomb material, part of the plate that will be on the inside of the bend is cut away and then the honeycomb material can be folded. The honeycomb material that is exposed by the part of the plate that is cut away may be injected with a support material, e.g. an epoxy resin, to form a fillet joint. The amount of the plate that is cut away will usually depend upon the radius of the bend to be formed, more of the plate needing to be cut away for sharper bends.

Advantageously, the inserts are provided with flanged portions at one or both ends. The flanged portions act to spread loads. Generally, the apertures and their inserts will increase in diameter with increasing loads to be carried.

The flanged portions may be formed as integral parts of the inserts, the inserts each having a central tubular portion which is in two separate parts, one part being for insertion from one side of the honeycomb material, and the other part being for insertion from the other side of the honeycomb material.

Alternatively, the flanged portions may be formed as separate parts of the inserts, the flanged portions being joined to the inserts after the inserts are provided in the apertures.

The adhesive for retaining the sleeve inserts in their apertures may be a two component adhesive comprising a curable resin material and a hardener. Presently preferred adhesives are Araldite 2005 and Redux 410. Both of these adhesives are available from Ciba-Geigy and Araldite and Redux are Registered Trade Marks.

The apertures for receiving the sleeve inserts will usually be drilled in the formed honeycomb material. However, if desired, the honeycomb material may be formed with the apertures.

The component parts may be any suitable component parts of the motor vehicle. Thus, for example, the component

parts may be a bonnet, wings, a screen, seats, a tail section and pedals.

As indicated above, the motor vehicle may be provided with an engine of any desired size, for example a 50cc engine or an 80cc engine.

Advantageously, the motor vehicle is provided with automatic transmission. The automatic transmission may be that known as Variomatic transmission. Obviously, if desired, the vehicle may be provided with a manually operated gear box.

The motor vehicle may be provided with one or more roll bars. With front and rear roll bars, the roll bars may be held together by one or more bracing members for providing extra rigidity.

The motor vehicle may be provided with a soft top, and also with a rubber suspension system.

The motor vehicle may be such that it has two seats which are arranged side by side. The two seats may also be arranged in line. With two seats that are arranged side by side, then the motor vehicle may include an occasional third rear seat-cum-parcel shelf.

The motor vehicle may be a rear wheel drive motor vehicle. Alternatively, if desired, the motor vehicle may be a front wheel drive motor vehicle.

The various components of the motor vehicle can be made in any desired materials such for example as metal or fibreglass for the body part. The various body parts are advantageously arranged to be bolt-on components. Bolt-on components are especially advantageous for replacing body parts such for example as wings and side panels which may become damaged in accidents.

Embodiments of the invention will now be described solely by way of example and with reference to the accompanying drawings in which:

Figure 1 is a side view of a motor vehicle;

Figure 2 is a front view of the motor vehicle;

Figure 3 is a rear view of the motor vehicle;

Figure 4 is a somewhat schematic view of some honeycomb material;

Figure 5 shows a first insert; and

Figure 6 shows a second insert.

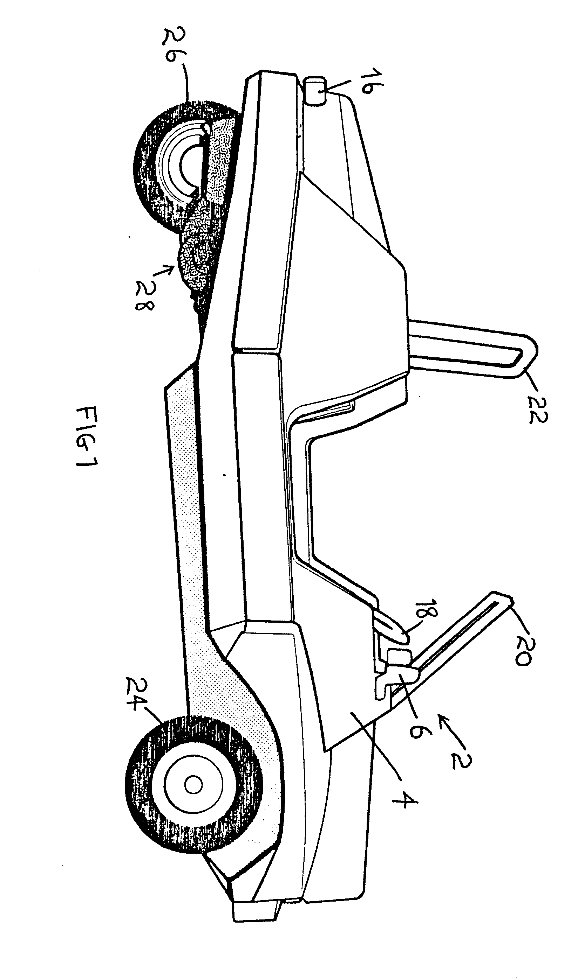

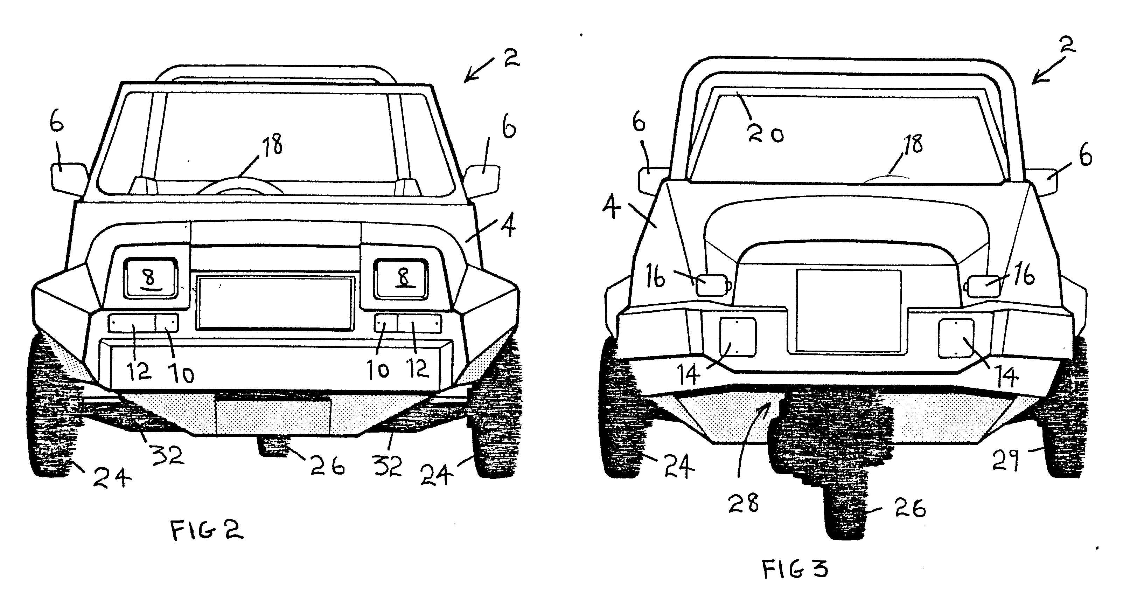

Referring to Figures 1 to 3, there is shown a motor vehicle 2 which is a three wheeled motor vehicle 2. The motor vehicle 2 is provided with a body 4 having the illustrated shape and the body 4 may be made of fibreglass or other desired material. The motor vehicle 2 also has, as can be seen from Figures 1 to 3, wing mirrors 6, front headlights 8, front side lights 10, front indicators 12, rear lights 14 and rear indicators 16. The vehicle 2 also has a steering wheel 18, a windscreen 20 and a rear roll bar 22. It will be seen that the vehicle 2 is of open top construction designed to be fitted with a soft top (not shown).

The vehicle 2 has two front wheels 24 and one rear wheel 26. The rear wheel 26 is driven by an engine 28. The transmission for the vehicle 2 is a Variomatic automatic transmission.

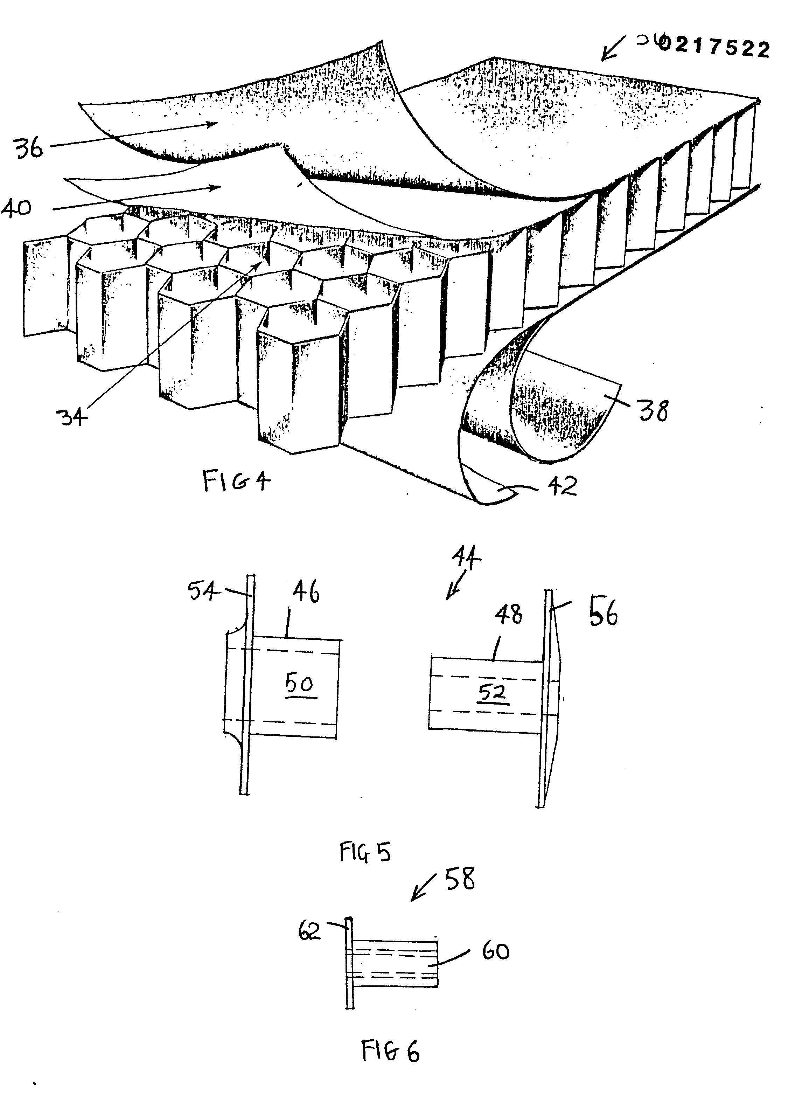

Referring now to Figure 4, there is shown the honeycomb material 30 from which the chassis of the vehicle 2 is made. Parts of the chassis are indicated by the reference numeral 32 in Figures 1 to 3. The honeycomb material 30 comprises a layer of aluminium honeycomb 34 sandwiched between two plates 36, 38. The plates 36,38 form skins over the top of the honeycomb 34. The plates 36,38 are adherred to opposite sides of the honeycomb 34 by the illustrated sheets 40,42 of adhesive film. The entire honeycomb material illustrated in Figure 4 is available from Ciba-Geigy.

Referring now to Figure 5, there is shown a two part sleeve insert 44 for being inserted in an aperture in the honeycomb material 30 shown in Figure 4. The aperture in the honeycomb material 30 will usually be drilled after the honeycomb material 30 has been formed. The insert 44 comprises a first part 46 which receives within it a second part 48. Both of the parts 46,48 have bores 50, 52 respectively. When the part 48 is in the part 46, it will be apparent that a bore of the size of the bore 52 is available right through the entire insert 44. The bore is thus used in utilising the sleeve insert 44 as an anchor point for receiving one or more component parts of the vehicle 2. The insert parts 46,48 are each provided with flanges 54,56 respectively. These flanges abut against the sides of the honeycomb material 30 and they help to spread loads applied to the insert 44.

The insert 44 will be glued in its aperture (not shown) in the honeycomb material 30. Any suitable type of adhesive may be employed, for example Araldite 2005 or Redux 410. The adhesive is applied to the apperture and the insert 44.

Referring now to Figure 6, there is shown an alternative sleeve insert 58 which is in one part. The sleeve insert 58 has a bore 60 and a single flange 62.

It is to be appreciated that the embodiments of the invention described above with reference to the accompanying drawings have been given by way of example only and that modifications may be effected. Thus, for example, although the vehicle 2 has been shown as open topped, the vehicle 2 could be produced as a hard topped vehicle 2. A front roll bar could be additionally provided and the two roll bars could be secured together with one or more bracing members for giving extra rigidity.

Generally, it will be appreciated from the drawings that the vehicle of the present invention can form cheap, reliable and safe transport for persons and especially for youths. Although the vehicle may be produced with any desired type of suspension system, a so called rubber suspension system may be employed as a particularly inexpensive and effective suspension system.    The rubber suspension system may utilise actual rubber or it may utilise plastics materials such for example as

polyurethane.

0217522

CLAIMS

1. A three or four wheeled motor vehicle, which motor vehicle comprises a chassis which is made of a honeycomb material, the honeycomb material being provided with apertures in which sleeve inserts are provided, the sleeve inserts being retained in position in their apertures by an adhesive, and the sleeve inserts forming anchor points for receiving component parts of the motor vehicle.

2. A three or four wheeled motor vehicle according to claim 1 in which the honeycomb material comprises a layer of honeycomb sandwiched between two plates or skins.

3. A three or four wheeled motor vehicle according to claim 2 in which the layer of honeycomb material is an aluminium layer of honeycomb material, and in which the two plates are aluminium plates.

4. A three or four wheeled motor vehicle according to claim 2 in which the layer of honeycomb material is a plastics foam layer of honeycomb material, and in which the two plates are fibre glass plates.

5.     A three or four wheeled motor vehicle according to any one of the preceding claims in which the inserts are provided with flanged portions at one or both ends.

6.     A three or four wheeled motor vehicle according to claim 5 in which the flanged portions are formed as integral parts of the inserts, the inserts each having a central tubular portion which is in two separate parts, one part being for insertion from one side of the honeycomb material, and the other part being for insertion from the other side of the honeycomb material.

7.     A three or four wheeled motor vehicle according to claim 5 in which the flanged portions are formed as separate parts of the inserts, the flanged portions being joined to the inserts after the inserts are provided in the apertures.

8.     A three or four wheeled motor vehicle according to any one of the preceding claims in which the adhesive for retaining the sleeve inserts in their apertures is a two component adhesive comprising a curable resin material and a hardener.

9.     A three or four wheeled motor vehicle according to any one of the preceding claims which is a rear wheel   drive motor vehicle and which is provided with automatic transmission.

10.     A three or four wheeled motor vehicle according to any one of the preceding claims and which is provided with a rubber suspension system.

FIG 1

FIG 2

FIG 3

0 217 522

FIG 4

FIG 5

FIG 6

## DOCUMENTS CONSIDERED TO BE RELEVANT

| Category | Citation of document with indication. where appropriate, of relevant passages | Relevant to claim | CLASSIFICATION OF THE APPLICATION (Int Cl 4) |
|---|---|---|---|
| X | DE-A-1 952 196  (DIVA CARS)<br><br>* whole document * | 1,2,4,5 | B 62 D  29/04 |
| Y | | 3 | |
| Y | AUTOMOBILTECHNISCHE ZEITSCHRIFT, vol. 84, no. 7/8, July/August 1982, pages 347-349, Schwäbisch-Gmünd; "6. VDI-Kunststofftagung: Kunststoffe im Personenwagen- und Nutzfahrzeugbau"<br>* page 347, columns 2, 3; figures 2, 3 * | 3 | |
| A | DE-A-1 600 270  (DOW CHEMICAL)<br>* claims 1, 3; figures 5-7 * | 1,5 | TECHNICAL FIELDS SEARCHED (Int Cl 4) |
| A | DE-U-1 972 409  (STIER)<br>* whole document * | 1,5 | B 62 D  27/00<br>B 62 D  29/00<br>B 62 D  31/00<br>B 62 D  61/00<br>B 62 D  65/00<br>B 29 C  65/00 |
| A | DE-B-1 755 319  (BUDD)<br>* claim 1 * | 8 | |
| A | EP-A-0 124 372  (HONDA)<br>* figure 1 * | 1 | |

The present search report has been drawn up for all claims

| Place of search | Date of completion of the search | Examiner |
|---|---|---|
| BERLIN | 02-12-1986 | KRIEGER P O |